# DEMANDE DE BREVET EUROPEEN

(11) **EP 4 834 091 A1**
(43) Date de publication de la demande: **04.11.2026**
(21) Numéro de dépôt: 26174314.0
(22) Date de dépôt: 23.04.2026
(51) Int. Cl.: A01D 46/26

(54) **RAQUETTE AMOVIBLE POUR UN OUTIL DE CUEILLETTE DE FRUITS DANS UN ARBRE**

(30) Priorité: 30.04.2025 FR 2504641
(71) Demandeur: Innogaia, 92380 Garches (FR)
(72) Inventeur: TRUDELLE, Claude, 92380 GARCHES (FR)
(74) Mandataire: Jorget, Quentin

(57) **Abrégé**

L'invention concerne une raquette amovible (2) pour un outil de cueillette (3) de fruits dans un arbre, la raquette amovible (2) comportant :
- un cadre périphérique (21) délimitant une ouverture centrale (10) ;
- un filet solidaire du cadre périphérique (21) et s'étendant en travers de l'ouverture centrale (10) ;
- un système de fixation (24) rapide et repositionnable de la raquette amovible (2) sur l'outil de cueillette (3), le système de fixation (24) étant solidaire du cadre périphérique (21).

## Description

Le contexte technique de la présente invention est celui de la cueillette des fruits dans un arbre. Plus particulièrement, l'invention a trait à un filet repositionnable pour une raquette amovible d'un outil de cueillette de fruits dans un arbre.

Dans l'état de la technique, outre l'utilisation de ses propres mains et l'escalade dans les arbres pour en attraper les fruits mûrs, on connaît l'utilisation d'une simple perche pour faire tomber des fruits d'un arbre ou encore l'utilisation d'échelles ou d'escabeaux pour monter plus haut dans l'arbre. L'utilisateur d'une telle perche est ainsi amené à frapper chaque branche de l'arbre afin de la faire vibrer et détacher ainsi les fruits portés par elle. Un inconvénient connu de cette pratique réside dans le risque d'abîmer les fruits ou l'arbre lorsqu'on bat ce dernier de la sorte.

On connait aussi une perche équipée d'une filet en forme de poche et surmonté d'une couronne possédant des ergots et/ou des crochets et/ou d'une lame permettant de couper le pédoncule. Un inconvénient connu de cet outillage réside dans sa pauvre ergonomie et un risque assez élevé d'abîmer les fruits durant sa manipulation.

Afin d'éviter d'abîmer l'arbre et ses branches durant la récolte, on connaît l'utilisation d'une cisaille placée à l'extrémité supérieure d'une perche afin d'autoriser la découpe précise des branches ou des pédoncules des fruits qu'on souhaite récolter. Si cette méthode permet de mieux préserver l'arbre et ses branches, un inconvénient connu réside dans le fait que les fruits ainsi détachés tombent de l'arbre et peuvent s'abîmer par terre durant cette chute.

Afin d'éviter la chute des fruits par terre et leur détérioration subséquente, on connaît l'ajout d'un panier de récupération monté sur la perche, juste en dessous de la cisaille. Dans de tels outils de cueillette, les fruits coupés par la cisaille tombent directement dans le panier de récupération. Il est ainsi possible de récolter des fruits sans les abîmer.

On connait notamment le document WO2024110877A1 qui décrit un outil de cueillette comportant un dispositif de cueillette située à une extrémité d'une perche et un panier de réception des fruits coupés. Le dispositif de cueillette comporte deux raquettes articulées munies d'un filet et qui se font face l'une à l'autre, de sorte à pouvoir saisir entre elles le fruit à récolter, en rapprochant lesdites raquettes l'une de l'autre. Un tel outil de cueillette permet ainsi de récolter les fruits sans les abîmer, tout en préservant l'arbre et les branches sur lesquelles elles sont prélevées.

L'inconvénient de ce système réside dans le manque de flexibilité de l'outil de cueillette. En effet, selon les fruits à récolter, la dureté desdits fruits ou encore leur fragilité diffère, conduisant ainsi à des manipulations plus ou moins complexes ou hasardeuses de l'outil de cueillette. Ainsi, il existe un besoin d'adaptation des raquettes et/ou de l'outil de cueillette afin de les rendre plus facilement adaptés à la cueillette de plusieurs types de fruits différents.

Complémentairement, en cas de casse de la raquette et/ou du filet, il est nécessaire de pouvoir changer facilement à la fois la raquette et/ou le filet endommagé.

La présente invention a pour objet de proposer une nouvelle raquette amovible pour un outil de cueillette de fruits dans un arbre afin de répondre au moins en grande partie aux problèmes précédents et de conduire en outre à d'autres avantages.

Un autre but de l'invention est de permettre de changer plus facilement de raquette amovible sur un tel outil de cueillette.

Selon un premier aspect de l'invention, on atteint au moins l'un des objectifs précités avec une raquette amovible pour un outil de cueillette de fruits dans un arbre, la raquette amovible comportant :
- un cadre périphérique délimitant une ouverture centrale ;
- un filet solidaire du cadre périphérique et s'étendant en travers de l'ouverture centrale ;
- un système de fixation rapide et repositionnable de la raquette amovible sur l'outil de cueillette, le système de fixation étant solidaire du cadre périphérique.

Dans le contexte de la présente invention, l'outil de cueillette est un outil manuel, c'est-à-dire pouvant être manipulé à la main par une seule personne, bien que l'outil de cueillette puisse être motorisé. L'outil de cueillette permet de prélever un fruit dans l'arbre. A cet effet, l'outil de cueillette est au moins configuré pour pouvoir détacher le fruit d'une branche de l'arbre. Dans le contexte de l'invention, le détachement du fruit de la branche est réalisé par arrachage du fruit de la branche qui le supportait. L'outil de cueillette est destiné à être associé à une extrémité supérieure d'une perche.

Dans le contexte de la présente invention, chaque raquette amovible de l'outil de cueillette est une raquette de préhension d'un fruit. En d'autres termes, chaque raquette amovible est destinée à être appliquée contre le fruit à prélever, de sorte à établir un contact surfacique avec ledit fruit. Les raquettes amovibles permettent ainsi d'établir une zone de contact contre le fruit à prélever. Le fruit à prélever est alors en prise entre les deux raquettes amovibles, et il est alors possible, en manipulant l'outil de cueillette, d'exercer une tension sur le fruit relativement à la branche qui le supporte, de sorte à pouvoir l'en détacher. L'invention prévoit ainsi une multitude de raquettes amovibles associées à plusieurs types de filets repositionnables, tous et toutes spécifiques aux différents types de fruits pouvant être récoltés dans les arbres.

Dans le contexte de la présente invention, un filet réplique le toucher bienveillant et protecteur de la main d'un utilisateur qui cueillerait directement le fruit dans l'arbre. Préférentiellement, le filet est du type d'un filet repositionnable. Ainsi, le filet forme une surface de contact et de préhension pour le fruit. Les caractéristiques mécaniques du filet, incluant sa matière, ses dimensions et/ou sa tension sur la raquette amovible avec laquelle il est destiné à collaborer sont spécifiques pour un type de fruit à cueillir.

Dans le contexte de la présente invention, la raquette amovible est délimitée par un cadre périphérique qui forme un contour périphérique extérieur. Le cadre périphérique délimite une ouverture centrale au travers de laquelle s'étend le filet. Le cadre périphérique peut prendre n'importe quelle forme et n'importe quelles dimensions. En particulier, il peut délimiter un contour fermé ou alors délimiter un contour partiellement ouvert.

Dans le contexte de la présente invention, un système de fixation rapide et repositionnable de la raquette amovible sur l'outil de cueillette permet d'attacher ou de détacher la raquette amovible de l'outil de cueillette avec lequel elle est destinée à collaborer, en fonction des besoins de l'utilisateur. Le système de fixation est configuré pour collaborer avec l'outil de cueillette, en vue de lier solidairement et temporairement - c'est-à-dire de manière non permanente et non définitive - ladite raquette amovible audit outil de cueillette. Plus particulièrement, le système de fixation est configuré pour collaborer avec un organe complémentaire de fixation associé à l'outil de cueillette, et plus spécifiquement avec un mécanisme d'articulation des raquettes amovibles de l'outil de cueillette.

Ainsi, la raquette amovible conforme au premier aspect de l'invention résout le problème technique en ce qu'elle autorise une interchangeabilité sur l'outil de cueillette, autorisant une maintenance plus facile en cas de casse ou de détérioration, mais aussi une interopérabilité augmentée puisque le changement de raquette amovible permet d'adapter lesdites raquettes amovibles aux fruits à récolter.

La raquette amovible conforme au premier aspect de l'invention comprend avantageusement au moins un des perfectionnements ci-dessous, les caractéristiques techniques formant ces perfectionnements pouvant être prises seules ou en combinaison :
- le système de fixation est du type d'un système à queue d'aronde. Cette configuration avantageuse autorise une fixation simple, rapide et robuste de chaque raquette amovible avec l'outil de cueillette. D'une manière générale, le système de fixation comporte une partie mâle proposant un profil trapézoïdal, plus large à la base qu'au sommet, associé à une rainure présentant un profil analogue. Ainsi, l'assemblage de la raquette amovible sur l'outil de cueillette est assuré par un mouvement de translation relatif entre la raquette amovible et l'outil de cueillette, dit mouvement d'engagement. Ce mouvement d'engagement est avantageusement orienté suivant une direction perpendiculaire à l'ouverture centrale de la raquette amovible. En d'autres termes, considérant l'ouverture centrale d'élongation dans un plan moyen donné, par exemple matérialisé par le filet repositionnable s'étendant en travers de l'ouverture centrale, le système de fixation par queue d'aronde est préférentiellement défini par un mouvement d'engagement qui s'étend perpendiculairement à l'ouverture centrale ;
- avantageusement, le système de fixation comporte (i) une embase solidaire du cadre périphérique, (ii) deux platines de fixation situées à distance l'une de l'autre et solidaires de l'embase, chaque platine de fixation collaborant avec un organe complémentaire de fixation associé à l'outil de cueillette. Dans le contexte de la présente invention, l'embase forme un corps distinct du cadre périphérique et s'étendant à distance dudit cadre périphérique. Les platines de fixation sont solidaires de l'embase et sont configurées pour collaborer avec l'outil de cueillette par engagement de formes complémentaires ;
- chaque platine de fixation comporte une demi-queue d'aronde configurée pour collaborer avec l'organe complémentaire de fixation associé à l'outil de cueillette. Plus particulièrement, chaque platine de fixation est du type d'une demi-queue d'aronde femelle configurée pour collaborer avec l'organe complémentaire de fixation associé à l'outil de cueillette, du type d'une demi-queue d'aronde mâle. Dans cette configuration avantageuse, plutôt que de prévoir qu'un seule queue d'aronde complète qui ne permettrait pas d'obtenir une stabilité suffisante de la raquette amovible sur l'outil de cueillette, et plutôt aussi que de prévoir deux queues d'arondes complètes qui formeraient alors un système de fixation surabondant qui complexifierait les raquettes amovibles et l'outil de cueillette selon l'invention, il est prévu de manière astucieuse de « découper » une queue d'aronde complète en deux parties complémentaires l'une de l'autres : les deux platines de fixation. Dans ce mode de réalisation privilégié, les platines de fixation sont symétriques l'une de l'autre par rapport à un plan médian de la raquette amovible. Plus particulièrement, chaque platine de fixation comporte (i) une surface d'appui axiale s'étendant dans un plan parallèle ou sensiblement parallèle à un axe de la raquette amovible d'élongation perpendiculaire à l'ouverture centrale, et (ii) un épaulement incliné par rapport à la surface d'appui axiale. Les surfaces d'appui des deux platines de fixation sont avantageusement coplanaires, et les épaulements inclinés des deux platines de fixation sont avantageusement symétriques l'un de l'autre, relativement à un plan perpendiculaire à la surface d'appui. En d'autres termes, les épaulements inclinés sont mis dos à dos, de sorte à reproduire ensemble la section d'une queue d'aronde. Ainsi, chaque platine de fixation est configurée pour être engagée sur l'organe complémentaire de fixation correspondant de l'outil de cueillette par l'intermédiaire d'un mouvement d'engagement selon une translation orientée suivant l'axe de la raquette amovible d'élongation perpendiculaire à l'ouverture centrale ;
- l'épaulement incliné et la surface d'appui de chaque platine de fixation forment un angle aigu. L'angle formé entre l'épaulement incliné et la surface d'appui de chaque platine de fixation est préférentiellement compris entre 30° et 60°. Complémentairement, un angle formé entre les deux épaulements inclinés des platines de fixation est compris entre 45° et 75°, préférentiellement égal à 60° ;
- les deux platines de fixation sont distantes l'une de l'autre et reliées préférentiellement entre elles par une entretoise. L'entretoise présente une conformation générale « en V ». Cette configuration avantageuse permet de maintenir un effort latéral entre les deux platine de fixation, garantissant une stabilité de la liaison avec l'organe complémentaire de fixation associé à l'outil de cueillette ;
- la surface d'appui et/ou l'épaulement incliné de chaque platine de fixation sont recouverts d'un revêtement facilitant le glissement sur l'organe complémentaire de fixation de l'outil de cueillette, tel que par exemple du téflon ou un plastique ;
- l'embase s'étend en saillie depuis le cadre périphérique, radialement vers l'extérieur par rapport à l'ouverture centrale. L'embase s'étend à l'opposé d'une partie frontale de la raquette amovible, la partie frontale comportant (i) une ouverture libre permettant d'insérer un pédoncule de fruit dans l'ouverture centrale de la raquette amovible ou aux raquettes de se glisser entre des fruits qui se touchent, ou (ii) une lame configurée pour couper une branche ou un pédoncule de fruit. Alternativement, l'embase s'étend en saillie depuis une partie latérale du cadre périphérique, la partie latérale s'étendant sensiblement à 90° par rapport à la partie frontale ;
- l'embase s'étend à distance du cadre périphérique, le cadre périphérique comportant des portée de liaison qui s'étendent en saillie depuis ledit cadre périphérique, ladite embase étant solidaire d'une extrémité des portées de liaison distale du cadre périphérique. Cette configuration avantageuse permet de faciliter l'ergonomie de l'outil de cueillette en éloignant les raquettes amovibles, et en particulier les filets par lesquels on saisit le fruit à cueillir, d'un mécanisme d'articulation desdites raquettes amovibles ;
- la raquette amovible comporte une butée d'arrêt permettant de définir une position d'arrêt de la raquette de fixation sur l'outil de cueillette, relativement à un axe de la raquette amovible d'élongation perpendiculaire à l'ouverture centrale. La butée d'arrêt s'étend en saillie depuis la surface d'appui axiale de chaque platine de fixation. En particulier, la butée d'arrêt s'étend en saillie depuis la surface d'appui axiale de chaque platine de fixation et en direction de l'outil de cueillette.

Selon un deuxième aspect de l'invention, il est proposé un outil de cueillette de fruits dans un arbre, l'outil de cueillette comportant une première raquette amovible conforme au premier aspect de l'invention ou selon l'un quelconque de ses perfectionnements, une deuxième raquette amovible conforme au premier aspect de l'invention ou selon l'un quelconque de ses perfectionnements, deux organes complémentaires de fixation configurés pour collaborer avec le système de fixation de chaque raquette amovible, et un mécanisme d'articulation de chaque raquette amovible permettant de contrôler une distance et/ou un angle d'ouverture entre la première raquette amovible et la deuxième raquette amovible afin de configurer l'outil de cueillette dans n'importe quelle configuration comprise entre :
- une configuration ouverte dans laquelle la distance et/ou l'angle d'ouverture entre la première raquette amovible et la deuxième raquette amovible est maximal; et
- une configuration fermée dans laquelle la distance ou l'angle d'ouverture entre la première raquette amovible et la deuxième raquette amovible est minimal.

Dans le contexte de la présente invention, le mécanisme d'articulation permet d'articuler les raquettes de préhension l'une par rapport à l'autre d'une part, et relativement à la perche d'autre part. Le mécanisme d'articulation permet ainsi de contrôler le mouvement et la position des raquettes de préhension entre la configuration ouverte et la configuration fermée. La configuration ouverte permet d'introduire le fruit à prélever entre les deux raquettes de préhension. Puis, en agissant sur le mécanisme d'articulation afin de rapprocher les raquettes de préhension l'une de l'autre, dans la direction de la configuration fermée, il est possible d'établir une prise sur le fruit à prélever, afin de pouvoir ultérieurement tirer dessus ou le faire pivoter pour le détacher de la branche à laquelle il était fixé.

Ainsi, l'outil de cueillette conforme au deuxième aspect de l'invention permet de faciliter la cueillette de fruits dans les arbres en proposant une manipulation, une préhension et un arrachage délicat qui évite d'abîmer la chair du fruit pendant l'opération. Sans que ce soit limitatif de la présente invention, l'outil de cueillette est particulièrement adapté à la cueillette des fruits mous, tels que notamment les figues ou les abricots, certains fruits à chair ferme tels que les pommes ou les poires, voire les petits fruits à long pédoncules tels les cerises.

L'outil de cueillette conforme au deuxième aspect de l'invention comprend avantageusement au moins un des perfectionnements ci-dessous, les caractéristiques techniques formant ces perfectionnements pouvant être prises seules ou en combinaison :
- chaque organe complémentaire de fixation comporte deux demi-queues d'arondes qui s'étendent en face l'une de l'autre. Comme expliqué précédemment pour la raquette amovible, chaque organe complémentaire de fixation comporte deux portées prismatiques formant chacune une demi-queue d'aronde. Ainsi, chaque organe complémentaire de fixation est du type d'une demi-queue d'aronde mâle configurée pour collaborer avec la platine de fixation associée de la raquette amovible correspondante, du type d'une demi-queue d'aronde femelle. Dans cette configuration avantageuse, plutôt que de prévoir qu'un seule queue d'aronde complète qui ne permettrait pas d'obtenir une stabilité suffisante de la raquette amovible sur l'outil de cueillette, et plutôt aussi que de prévoir deux queues d'arondes complètes qui formeraient alors un système de fixation surabondant qui complexifierait les raquettes amovibles et l'outil de cueillette selon l'invention, il est prévu de manière astucieuse de « scinder » une queue d'aronde complète en deux parties complémentaires l'une de l'autres : les deux portées prismatiques. Dans ce mode de réalisation privilégié, les portées prismatiques sont symétriques l'une de l'autre par rapport à un plan médian de l'outil de cueillette ;
- plus particulièrement, les portées prismatiques de chaque organe complémentaire de fixation comportent chacune (i) une face biseautée configurée pour collaborer avec l'épaulement incliné de la platine de fixation correspondante de la raquette amovible, et (ii) une face supérieure collaborant avec la surface d'appui axiale de la platine de fixation correspondante de la raquette amovible. Les faces supérieures des deux portées prismatiques sont avantageusement coplanaires, et les faces biseautées des deux portées prismatiques sont avantageusement symétriques l'une de l'autre, relativement à un plan perpendiculaire à la face supérieure. En d'autres termes, les faces biseautées sont mises dos à dos, de sorte à reproduire ensemble la section d'une seule queue d'aronde mâle. Ainsi, chaque portée prismatique est configurée pour être engagée dans la platine de fixation correspondant de la raquette amovible par l'intermédiaire d'un mouvement d'engagement selon une translation orientée suivant une direction perpendiculaire à l'ouverture centrale de la raquette amovible ;
- avantageusement, les deux portées prismatiques délimitent ensemble une conformation générale « en U » pour l'organe complémentaire de fixation, les platines de fixation de la raquette amovible correspondante s'étendant à l'intérieur du « U » ainsi délimité ;
- l'outil de cueillette comporte un système de verrouillage de chaque raquette amovible sur le mécanisme d'articulation, le système de verrouillage étant configuré pour empêcher chaque raquette amovible de s'échapper ou glisser librement hors du mécanisme d'articulation ;
- le système de verrouillage est logé dans une base de l'organe complémentaire de fixation correspondant et à partir de laquelle base les portées prismatiques s'étendent ;
- le système de verrouillage est du type d'un système à ressort. En particulier, le système de verrouillage comporte un corps monté libre en translation dans la base de l'organe complémentaire de fixation correspondant et poussé en direction de la raquette amovible associé par l'intermédiaire d'un ressort.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre un premier exemple de réalisation d'une raquette amovible conforme au premier aspect de l'invention ;
[Fig.2] illustre un deuxième exemple de réalisation d'une raquette amovible conforme au premier aspect de l'invention ;
[Fig.3] illustre une vue de détail de la raquette amovible illustrée sur la FIGURE 2 ;
[Fig.4] illustre un outil de cueillette conforme au deuxième aspect de l'invention et équipé d'une raquette amovible conforme au premier aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

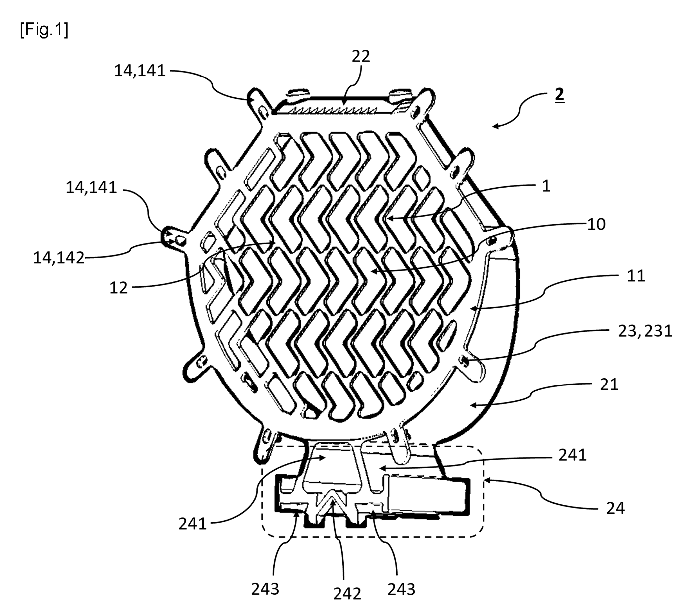

En référence aux FIGURES 1 à 5, l'invention adresse une raquette amovible 2 pour un outil de cueillette 3 de fruits dans un arbre, la raquette amovible 2 comportant un cadre périphérique 21 délimitant une ouverture centrale 10 et un filet solidaire du cadre périphérique 21 et s'étendant en travers de l'ouverture centrale 10.

De préférence, le filet est du type d'un filet repositionnable 1. Un tel filet repositionnable 1 comporte un bord périphérique 11 délimitant une ouverture centrale 10. Le filet repositionnable 1 est du type d'un filet repositionnable 1 plat. En d'autres termes, le filet repositionnable 1 prend la forme d'une plaque de faible épaisseur, en comparaison à ses dimensions longitudinales et transversales. Par exemple, l'épaisseur du filet repositionnable 1 est de l'ordre d'un millimètre.

Le filet repositionnable 1 est obtenu par découpage et/ou emboutissage ou moulage d'une bande plate d'un matériau adapté. Par matériau adapté, on entend plus particulièrement un matériau lavable et/ou lessivable à la main, à l'eau chaude et avec un liquide vaisselle par exemple. De préférence, le filet repositionnable 1 est formé d'un matériau apte au contact alimentaire. Enfin, les propriétés mécaniques du matériau formant le filet repositionnable 1 sont choisies pour ne pas abîmer les fruits lors de leur cueillette. En particulier, le matériau formant le filet repositionnable 1 est du type d'un matériau élastique, tel que par exemple un élastomère, un caoutchouc ou un polymère. Eventuellement, le filet repositionnable 1 est formé d'un matériau textile ou tressé.

Par « élastique », on comprend que le matériau choisi pour le filet repositionnable 1 est configuré pour pouvoir être élastiquement déformé lors d'un usage normal sur un outil de cueillette 3. En d'autres termes, le matériau choisi pour le filet repositionnable 1 autorise une déformation élastique dudit filet repositionnable 1 lorsque celui-ci set utilisé sur une raquette amovible 2 pour la saisie d'un fruit sur un arbre. Par exemple, le matériau formant le filet repositionnable 1 présente une dureté comprise entre 40° Shore A et 70° Shore A.

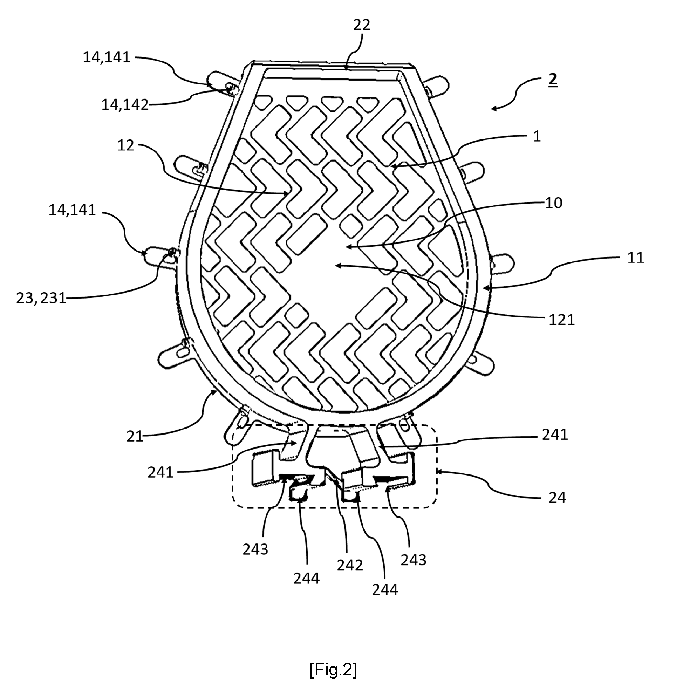

Afin d'autoriser la fixation amovible du filet repositionnable 1 sur la raquette amovible 2 associée, le filet repositionnable 1 comporte une pluralité d'éléments de fixation 14 détachable destinés à collaborer avec des éléments complémentaires de fixation de la raquette amovible 2, les éléments de fixation 14 détachable s'étendant depuis le bord périphérique 11 du filet repositionnable 1. Plus particulièrement, comme visible sur les FIGURES 1 et 2, les éléments de fixation 14 détachable s'étendent en saillie depuis le bord périphérique 11, radialement vers l'extérieur par rapport à l'ouverture centrale 10. Les éléments de fixation 14 détachable sont répartis le long du bord périphérique 11 afin de garantir une bonne tension du filet repositionnable 1 sur la raquette amovible 2, et de permettre ainsi un fonctionnement optimal lors des opérations de cueillette des fruits dans l'arbre.

Avantageusement, les éléments de fixation 14 détachable comportent des œillets 142 de fixation destinés à collaborer avec des ergots 231 de fixation aménagés sur la raquette amovible 2 et formant les éléments complémentaires de fixation. Les oeillets 142 de fixation sont supportés par des pattes de fixation 141 qui s'étendent radialement vers l'extérieur depuis le bord périphérique 11 du filet repositionnable 1. Chaque œillet 142 prend la forme d'une ouverture traversante en travers de la patte de fixation 141 correspondante, afin de pouvoir introduire en force un ergot 231 de fixation de la raquette amovible 2.

Comme visible sur les FIGURES 1 et 2, le filet repositionnable 1 est formé d'une pluralité de cordes 12 qui s'étendent depuis et en travers du bord périphérique 11, de sorte à former une maille ajourée dans l'ouverture centrale 10. La maille du filet repositionnable 1 peut être quelconque, telle que par exemple du type d'une maille rectangulaire, ou encore d'une maille à chevrons 13. En d'autres termes, les cordes 12 forment des parties pleines du filet repositionnable 1. Les cordes 12 du filet repositionnable 1 s'entremêlent et délimitent entre elles des espaces ajourés.

Dans l'exemple de réalisation illustré sur la FIGURE 1, le filet repositionnable 1 comporte exclusivement une maille formant un treillis régulier dans toute l'ouverture centrale 10, à l'intérieur du bord périphérique 11. En revanche, dans l'exemple de réalisation illustré sur la FIGURE 2, le filet repositionnable 1 comporte une membrane 121 pleine formant une partie centrale dudit filet repositionnable 1 et entourée d'un treillis périphérique autour de ladite membrane 121 pleine et vers le bord périphérique 11. Cet exemple de réalisation est particulièrement adapté aux fruits à chaire très molle, tels que par exemple les figues : la partie centrale du filet repositionnable 1 est occupé par la membrane 121 pleine qui présente une plus grande surface en contact avec le fruit prélevé afin d'éviter une pression trop importante qui pourrait conduire à abimer la chair du fruit. La forme et les dimensions de la membrane 121 centrale peuvent être quelconque. Par exemple, la membrane 121 pleine a une forme circulaire ou une forme rectangulaire, voire carré ou ovoïde, voire encore une forme polygonale quelconque.

Comme évoqué précédemment, les éléments de fixation 14 du filet repositionnable 1 collaborent avec des éléments complémentaires de fixation de la raquette amovible 2. Chaque élément complémentaire de fixation est associé au cadre périphérique 21 de la raquette amovible 2. En d'autres termes, chaque élément complémentaire de fixation s'étend en saillie depuis le cadre périphérique 21 de la raquette amovible 2, radialement vers l'extérieur par rapport à l'ouverture centrale 10. Dans les exemples de réalisation visibles sur les FIGURES 1 à 4, chaque élément complémentaire de fixation comporte un ergot 231 de fixation qui s'étend en saillie depuis le cadre périphérique 21. Chaque ergot 231 de fixation comporte :
- une portée qui s'étend en saillie depuis le cadre périphérique 21 et radialement vers l'extérieur par rapport à l'ouverture centrale 10, et
- une protrusion formée au niveau d'une extrémité libre de la portée, la protrusion formant un organe de retenue dans l'œillet 142 formé sur l'élément de fixation 14 détachable du filet repositionnable 1. Typiquement, une dimension de la protrusion est supérieure à une dimension de l'œillet 142, de sorte à ce que ladite protrusion puisse être introduite en force dans l'œillet 142, par déformation élastique dudit œillet 142, formant ainsi un organe de retenue du filet repositionnable 1 sur la raquette amovible 2.

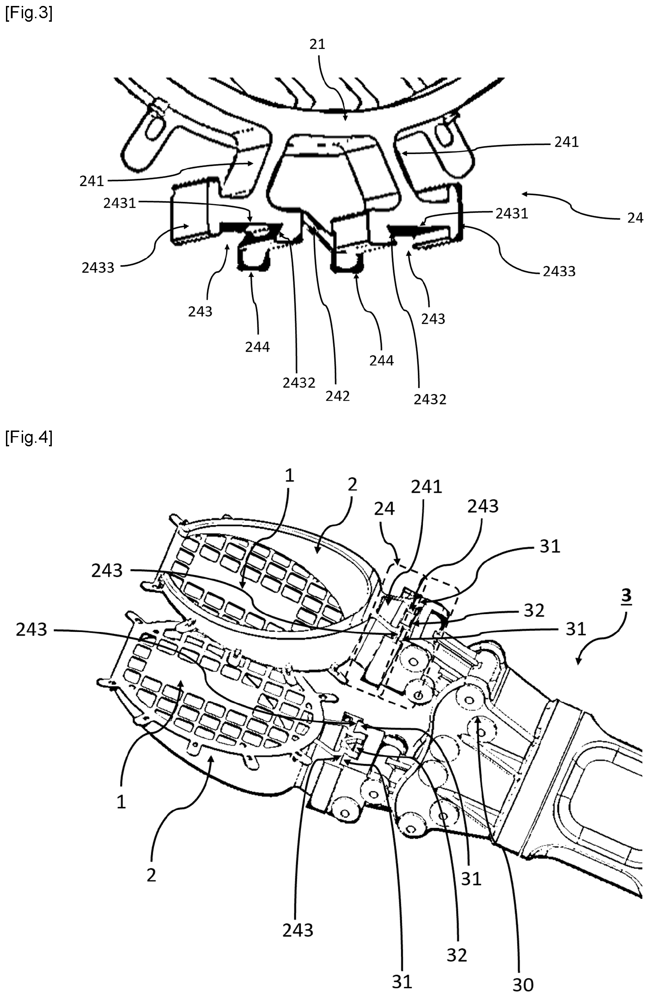

La raquette amovible 2 comporte un cadre périphérique 21 qui présente un contour fermé ou semi-fermé. Un contour fermé est délimité par un contour fermé, tandis qu'un contour semi-fermé définit un cadre périphérique 21 comportant au niveau d'une face avant une ouverture libre, qui peut éventuellement être comblée par une lame de coupe 22 comme dans l'exemple illustré sur la FIGURE 1. Cependant, pour des plus gros fruits, tels que par exemple pour des pommes ou des poires, le cadre périphérique 21 peut demeurer complètement ouvert au niveau de la face avant des raquettes amovibles 2, comme dans l'exemple illustré sur la FIGURE 4.

Le cadre périphérique 21 de la raquette amovible 2 s'étend globalement dans un plan, de sorte à définir un plan de liaison du filet repositionnable 1 associé. Une hauteur du cadre périphérique 21, prise perpendiculairement au filet repositionnable 1 associé, est constante ou variable, comme visible dans l'exemple de réalisation illustré sur la FIGURE 4. Dans cet exemple de réalisation, une hauteur du cadre périphérique 21 prise du côté du mécanisme d'articulation 30 de l'outil de cueillette 3 est supérieure à une hauteur du cadre périphérique 21 prise du côté de la face avant. cette configuration avantageuse permet de limiter le poids des raquettes amovible afin d'optimiser l'ergonomie de l'outil de cueillette 3.

En outre, la raquette amovible 2 selon l'invention comporte aussi un système de fixation 24 rapide et repositionnable de la raquette amovible 2 sur l'outil de cueillette 3, et en particulier sur un mécanisme d'articulation 30 des raquettes amovibles 2 de l'outil de cueillette 3. Le système de fixation 24 rapide et repositionnable de la raquette amovible 2 sur l'outil de cueillette 3 permet d'attacher ou de détacher la raquette amovible 2 de l'outil de cueillette 3 avec lequel elle est destinée à collaborer, en fonction des besoins de l'utilisateur. Plus particulièrement, comme visible sur la FIGURE 4, le système de fixation 24 de chaque raquette amovible 2 est configuré pour collaborer avec un organe complémentaire de fixation 23 associé à l'outil de cueillette 3, et plus spécifiquement avec un mécanisme d'articulation 30 des raquettes amovibles 2 de l'outil de cueillette 3.

Le système de fixation 24 est solidaire du cadre périphérique 21 de la raquette amovible 2. Le système de fixation 24 est préférentiellement du type d'un système à queue d'aronde, afin d'autoriser une fixation simple, rapide et robuste de chaque raquette amovible 2 sur le mécanisme d'articulation 30 de l'outil de cueillette 3.

Comme visible plus en détail sur la FIGURE 3, le système de fixation 24 comporte :
- une embase 241 solidaire du cadre périphérique 21. L'embase 241 forme un corps distinct du cadre périphérique 21 et s'étend à distance dudit cadre périphérique 21. Cette configuration avantageuse permet d'éloigner les raquettes amovibles 2 du mécanisme d'articulation 30 et de rendre plus ergonomique l'outil de cueillette 3, facilitant la récolte des fruits entre deux raquettes amovibles 2 ainsi articulées, via leur filet repositionnable 1 qui se font face. Dans l'exemple de réalisation, l'embase 241 comporte deux portées inclinées qui s'étendent en saillie par rapport au cadre périphérique 21 de la raquette amovible 2. Les portées inclinées s'étendent dans le prolongement du cadre périphérique 21, du côté du mécanisme d'articulation 30 de l'outil de cueillette 3. Les portées inclinées forment ainsi une structure évasée permettant de renforcer la stabilité de la raquette amovible 2 sur l'outil de cueillette 3 ; et
- deux platines de fixation 243 situées à distance l'une de l'autre et solidaires de l'embase 241, chaque platine de fixation 243 collaborant avec un organe complémentaire de fixation 23 associé à l'outil de cueillette 3. Les platines de fixation 243 sont solidaires de l'embase 241 - et en particulier des portées inclinées - et les platines de fixation 243 sont configurées pour collaborer avec l'outil de cueillette 3 - et plus particulièrement le mécanisme d'articulation 30 - par engagement de formes complémentaires.

Chaque platine de fixation 243 comporte une demi-queue d'aronde configurée pour collaborer avec l'organe complémentaire de fixation 23 associé à l'outil de cueillette 3. Plus particulièrement, chaque platine de fixation 243 est du type d'une demi-queue d'aronde femelle configurée pour collaborer avec l'organe complémentaire de fixation 23 associé de l'outil de cueillette 3, ce dernier étant du type d'une demi-queue d'aronde mâle, comme visible sur la FIGURE 4.

Cette configuration permet d'obtenir par équivalence une fixation par queue d'aronde mais selon une géométrie plus évasées, augmentant la surface d'appui 2431 sur le mécanisme d'articulation 30 de l'outil de cueillette 3. Les platines de fixation 243 sont symétriques l'une de l'autre par rapport à un plan médian de la raquette amovible 2. Plus particulièrement, chaque platine de fixation 243 comporte :
- une surface d'appui 2431 axiale s'étendant dans un plan parallèle ou sensiblement parallèle à un axe de la raquette amovible 2 d'élongation perpendiculaire à l'ouverture centrale 10. Comme visible sur les FIGURES 3 et 4, les surfaces d'appui 2431 des deux platines de fixation 243 sont avantageusement coplanaires ; et
- un épaulement incliné 2432 par rapport à la surface d'appui 2431 axiale. Comme visible sur les FIGURES 3 et 4, les épaulements inclinés 2432 des deux platines de fixation 243 sont symétriques l'un de l'autre, relativement à un plan perpendiculaire à la surface d'appui 2431. En d'autres termes, les épaulements inclinés 2432 sont mis dos à dos, de sorte à reproduire ensemble la section d'une queue d'aronde. L'épaulement incliné 2432 et la surface d'appui 2431 de chaque platine de fixation 243 forment ensemble un angle aigu.

Les deux platines de fixation 243 sont distantes l'une de l'autre et préférentiellement reliées entre elle par une entretoise 242 présentant une conformation générale « en V » afin de maintenir un effort latéral entre les deux platines de fixation 243, garantissant une stabilité de la liaison avec l'organe complémentaire de fixation 23 associé à l'outil de cueillette 3.

La raquette amovible 2 comporte aussi une butée d'arrêt 244 permettant de définir une position d'arrêt de la raquette de fixation sur l'outil de cueillette 3, lors de l'engagement du système de fixation 24 sur l'organe complémentaire de fixation 23 de l'outil de cueillette 3. La butée d'arrêt 244 s'étend en saillie depuis la surface d'appui 2431 axiale de chaque platine de fixation 243.

Enfin, le système de fixation 24 comporte aussi un épaulement extérieur 2433 qui encadre les deux platines de fixation 243. L'épaulement extérieur 2433 permet ainsi de faciliter le montage des raquettes amovibles 2 sur le mécanisme d'articulation 30 de l'outil de cueillette 3, et plus particulièrement de guider l'utilisateur dans l'engagement du système de fixation 24 des raquettes amovibles 2 sur l'organe complémentaire de fixation 23 de l'outil de cueillette 3.

Ainsi, chaque platine de fixation 243 est configurée pour être engagée sur l'organe complémentaire de fixation 23 correspondant de l'outil de cueillette 3 par l'intermédiaire d'un mouvement d'engagement orienté perpendiculairement à l'ouverture centrale 10.

Comme visible sur la FIGURE 4, le système de fixation 24 de chaque raquette amovible 2 coopère avec l'organe complémentaire de fixation 23 situé en regard sur le mécanisme d'articulation 30 de l'outil de cueillette 3. Ainsi, de manière analogue au système de fixation 24 des raquettes amovibles 2, chaque organe complémentaire de fixation 23 comporte deux demi-queues d'arondes qui s'étendent en face l'une de l'autre.

Plus particulièrement, chaque organe complémentaire de fixation 23 comporte deux portées prismatiques 31 formant chacune une demi-queue d'aronde mâle coopérant avec les platines de fixation 243s de la raquette amovible 2 associée. Plus particulièrement, les portées prismatiques 31 de chaque organe complémentaire de fixation 23 comportent chacune :
- une face biseautée configurée pour collaborer avec l'épaulement incliné 2432 de la platine de fixation 243 correspondante de la raquette amovible 2. Les faces supérieures des deux portées prismatiques 31 sont coplanaires, et
- une face supérieure collaborant avec la surface d'appui 2431 axiale de la platine de fixation 243 correspondante de la raquette amovible 2. Les faces biseautées des deux portées prismatiques 31 sont symétriques l'une de l'autre, relativement à un plan perpendiculaire à la face supérieure. En d'autres termes, les faces biseautées sont mises dos à dos, de sorte à reproduire ensemble la section d'une seule queue d'aronde mâle.

Ainsi, chaque portée prismatique 31 est configurée pour être engagée dans la platine de fixation 243 correspondant de la raquette amovible 2 par l'intermédiaire d'un mouvement d'engagement orientée perpendiculairement à l'ouverture centrale 10 de la raquette amovible 2 correspondante. Comme visible sur la FIGURE 4, les deux portées prismatiques 31 délimitent ensemble une conformation générale « en U » pour l'organe complémentaire de fixation 23, les platines de fixation 243 de la raquette amovible 2 correspondante s'étendant à l'intérieur du « U » ainsi délimité. L'épaulement extérieur 2433 de la raquette amovible 2 permet de sécuriser cet assemblage et de faciliter son montage.

Enfin, afin de maintenir en position les raquettes amovibles 2 sur l'outil de cueillette 3, il est nécessaire de maintenir l'assemblage par queue d'aronde ainsi réalisé. A cette fin, l'outil de cueillette 3 comporte un système de verrouillage 32 de chaque raquette amovible 2 sur le mécanisme d'articulation 30, le système de verrouillage 32 étant configuré pour empêcher chaque raquette amovible 2 de s'escamoter librement hors du mécanisme d'articulation 30. Plus particulièrement, le système de verrouillage 32 est configuré pour brider le système de fixation 24 de la raquette amovible 2 sur l'organe complémentaire de fixation 23 de l'outil de cueillette 3, en exerçant un effort depuis l'outil de cueillette 3 sur la raquette amovible 2. Ainsi, le système de verrouillage 32 est logé dans une base de l'organe complémentaire de fixation 23 correspondant et à partir de laquelle base les portées prismatiques 31 s'étendent.

Le système de verrouillage 32 est du type d'un système à ressort. En particulier, le système de verrouillage 32 comporte un corps monté libre en translation dans la base de l'organe complémentaire de fixation 23 correspondant et poussé en direction de la raquette amovible 2 associé par l'intermédiaire d'un ressort.

Enfin, l'invention adresse un outil de cueillette 3 de fruits dans un arbre, l'outil de cueillette 3 comportant une première raquette amovible 2 et une deuxième raquette amovible 2 telles que décrites précédemment, deux organes complémentaires de fixation 23 configurés pour collaborer avec le système de fixation 24 de chaque raquette amovible 2, et un mécanisme d'articulation 30 de chaque raquette amovible 2 permettant de contrôler une distance et/ou un angle d'ouverture entre la première raquette amovible 2 et la deuxième raquette amovible 2 afin de configurer l'outil de cueillette 3 dans n'importe quelle configuration comprise entre :
- une configuration ouverte dans laquelle la distance et/ou l'angle d'ouverture entre la première raquette amovible 2 et la deuxième raquette amovible 2 est maximal ; et
- une configuration fermée dans laquelle la distance ou l'angle d'ouverture entre la première raquette amovible 2 et la deuxième raquette amovible 2 est minimal.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Raquette amovible (2) pour un outil de cueillette (3) de fruits dans un arbre, la raquette amovible (2) comportant :
- un cadre périphérique (21) délimitant une ouverture centrale (10) ;
- un filet solidaire du cadre périphérique (21) et s'étendant en travers de l'ouverture centrale (10) ;
- un système de fixation (24) rapide et repositionnable de la raquette amovible (2) sur l'outil de cueillette (3), le système de fixation (24) étant solidaire du cadre périphérique (21) ;
**caractérisé en ce que** le système de fixation (24) autorise un assemblage de la raquette amovible (2) sur l'outil de cueillette (3) est assuré par un mouvement d'engagement de la raquette amovible (2) sur l'outil de cueillette (3), orienté suivant une direction perpendiculaire à l'ouverture centrale (10) de la raquette amovible (2).

2. Raquette amovible (2) selon la revendication précédente, dans lequel le système de fixation (24) est du type d'un système à queue d'aronde.

3. Raquette amovible (2) selon la revendication précédente, dans lequel le système de fixation (24) comporte :
- une embase (241) solidaire du cadre périphérique (21) ;
- deux platines de fixation (243) situées à distance l'une de l'autre et solidaires de l'embase (241), chaque platine de fixation (243) collaborant avec un organe complémentaire de fixation (23) associé à l'outil de cueillette (3).

4. Raquette amovible (2) selon la revendication précédente, dans lequel chaque platine de fixation (243) comporte une demi-queue d'aronde configurée pour collaborer avec l'organe complémentaire de fixation (23) associé à l'outil de cueillette (3).

5. Raquette amovible (2) selon la revendication précédente, dans lequel les platines de fixation (243) sont symétriques l'une de l'autre par rapport à un plan médian de la raquette amovible (2).

6. Raquette amovible (2) selon la revendication précédente, dans lequel chaque platine de fixation (243) comporte :
- une surface d'appui (2431) axiale s'étendant dans un plan parallèle ou sensiblement parallèle à un axe de la raquette amovible (2) d'élongation perpendiculaire à l'ouverture centrale (10) ;
- un épaulement incliné (2432) par rapport à la surface d'appui (2431) axiale.

7. Raquette amovible (2) selon la revendication précédente, dans lequel les deux platines de fixation (243) sont distantes l'une de l'autre et reliées entre elle par une entretoise (242).

8. Raquette amovible (2) selon l'une quelconque des revendications précédentes, dans lequel la raquette amovible (2) comporte une butée d'arrêt (244) permettant de définir une position d'arrêt de la raquette de fixation sur l'outil de cueillette (3), relativement à un axe de la raquette amovible (2) d'élongation perpendiculaire à l'ouverture centrale (10).

9. Outil de cueillette (3) de fruits dans un arbre, l'outil de cueillette (3) comportant une première raquette amovible (2) selon l'une quelconque des revendications précédentes, une deuxième raquette amovible (2) selon l'une quelconque des revendications précédentes, deux organes complémentaires de fixation (23) configurés pour collaborer avec le système de fixation (24) de chaque raquette amovible (2), et un mécanisme d'articulation (30) de chaque raquette amovible (2) permettant de contrôler une distance et/ou un angle d'ouverture entre la première raquette amovible (2) et la deuxième raquette amovible (2) afin de configurer l'outil de cueillette (3) dans n'importe quelle configuration comprise entre :
- une configuration ouverte dans laquelle la distance et/ou l'angle d'ouverture entre la première raquette amovible (2) et la deuxième raquette amovible (2) est maximal ; et
- une configuration fermée dans laquelle la distance ou l'angle d'ouverture entre la première raquette amovible (2) et la deuxième raquette amovible (2) est minimal.

10. Outil de cueillette (3) selon la revendication précédente, dans lequel chaque organe complémentaire de fixation (23) comporte deux demi-queues d'arondes qui s'étendent en face l'une de l'autre, chaque organe complémentaire de fixation (23) comportant deux portées prismatiques (31) comportant chacune :
- une face biseautée configurée pour collaborer avec l'épaulement incliné (2432) de la platine de fixation (243) correspondante de la raquette amovible (2) ; et
- une face supérieure collaborant avec la surface d'appui (2431) axiale de la platine de fixation (243) correspondante de la raquette amovible (2).
